Europäisches Patentamt

European Patent Office

Office européen des brevets

(19)

(11) Numéro de publication: **0 178 192**
**B1**

# FASCICULE DE BREVET EUROPEEN

(12)

(45) Date de publication du fascicule du brevet:
21.02.90

(51) Int. Cl.⁵: **H 04 J 3/06**

(21) Numéro de dépôt: 85401422.2

(22) Date de dépôt: 12.07.85

---

(54) **Dispositif de détection de perte, et de reprise de verrouillage de trame pour un signal numérique.**

---

(30) Priorité: 20.07.84 FR 8411607

(43) Date de publication de la demande:
16.04.86 Bulletin 86/16

(45) Mention de la délivrance du brevet:
21.02.90 Bulletin 90/8

(84) Etats contractants désignés:
CH DE GB LI NL

(56) Documents cités:
EP-A- 0 084 787
US-A- 3 603 735

PATENTS ABSTRACTS OF JAPAN, vol. 7, no. 247 (E-208)
[1392], 2 novembre 1983; & JP - A - 58 136 150
(MITSUBISHI DENKI K.K.) 13.08.1983
PATENTS ABSTRACTS OF JAPAN, vol. 4, no. 141 (E-28)
[623], 4 octobre 1980, page 55E28; & JP - A - 55 92 054
(FUJITSU K.K.) 12.07.1980
IEEE TRANSACTIONS ON COMMUNICATIONS, vol.
COM-20, no. 5, octobre 1972, pages 1005-1008, New
York, US; IU. TIMOR: "Frame synchronization in
time-multiplexed PCM telemetry with variable frame
length"

(73) Titulaire: **SAT Société Anonyme de
Télécommunications, 41, rue Cantagrel, F-75631 Paris
Cedex 13 (FR)**

(72) Inventeur: **Riou, Armand Jean, 41, rue Cantagrel,
F-75631 Paris Cedex 13 (FR)**

(74) Mandataire: **Martinet & Lapoux, 62, rue des Mathurins,
F-75008 Paris (FR)**

**Desciption**

La présente invention concerne, d'une manière générale, la perte et la reprise de verrouillage de trame à une extrémité de réception d'une ligne de transmission numérique telle qu'un démultiplexeur démultiplexant un signal numérique en des signaux composants. Plus particulièrement, l'invention a trait à un dispositif de perte et de reprise de verrouillage inclus dans l'extrémité de réception en vue de reconnaître un mot de synchronisation périodique, tel qu'un mot de verrouillage de trame, convoyé par le signal numérique et ainsi synchroniser une base de temps élaborant divers signaux d'horloge nécessaires au démultiplexage.

Dans la plupart des dispositifs connus, un registre à décalage reçoit le signal numérique sous la commande d'un signal d'horloge récupéré à la fréquence de rythme du signal numérique. Le registre à décalage comporte des étages en nombre N égal au nombre de bits du mot de verrouillage afin d'extraire à la cadence du signal d'horloge récupéré des mots à N bits. Chaque mot extrait à N bits est comparé dans un comparateur logique au mot de verrouillage mémorisé dans une mémoire morte, afin de détecter le mot de verrouillage parmi les mots extraits. La détection du mot de verrouillage permet de synchroniser la base de temps avec la fréquence de trame du signal numérique et de bloquer et débloquer la base du temps en fonction de nombres prédéterminés de mots de verrouillage détectés corrects ou incorrects définis suivant des taux d'erreurs prédéterminées.

Actuellement, le temps de propagation de mémoires programmables et autres circuits logiques analogues est supérieur à l'intervalle de temps élémentaire correspondant à un bit d'un signal numérique ayant un débit élevé de l'ordre de plusieurs Mbit/s. Une reconnaissance du mot de verrouillage parmi des mots extraits du registre à décalage à la fréquence de rythme du signal numérique à débit élevé est donc incompatible avec les mémoires usuelles, si on désire tolérer quelques erreurs sur le mot de verrouillage détecté. En effet, dans une mémoire utilisée comme comparateur logique, chaque mot extrait est comparé bit à bit à chacun des mots de verrouillage erronés et tolérés. Par exemple, si le mot de verrouillage comporte N bits, le mot extrait est comparé à N mots de verrouillage ayant 1 bit erroné si on désire tolérer au plus une erreur. La durée de traitement du mot extrait est d'autant plus longue que le nombre d'erreurs est grand. Les dispositifs connus utilisés pour des signaux numériques ayant un débit de l'ordre de quelques dizaines Mbits/s au plus font alors appel à un circuit logique ne comparant chaque mot extrait qu'à mot de verrouillage sans erreur et donc ne tolèrent aucun bit erroné dans le mot de verrouillage détecté. Cependant, une tolérance d'au moins une erreur dans le mot de verrouillage permettrait de maintenir le verrouillage de trame lorsque l'erreur est fugitive, tel que par exemple une microcoupure ou un décalage d'un bit dans le signal en amont du démultiplexeur.

Dans «Patents abstracts of Japan», vol. 7, n°. 247 (E-208) [1392], 2 novembre 1983, est présenté un circuit de détection de code de synchronisation conçu pour extraire et traiter des mots ayant un nombre de bits supérieur au nombre de bits N du mot de verrouillage. Le circuit est équipé de registres de taille adéquate et d'une mémoire fonctionnant à une cadence inférieure à celle du signal d'horloge récupéré. Néanmoins, ce circuit requiert une mémoire de capacité relativement très importante, et de plus, il n'est pas prévu pour prendre en compte des erreurs dans le mot de verrouillage.

L'invention vise à remédier aux inconvénients précédents, et plus précisément à fournir un dispositif de perte et de reprise de verrouillage de trame comprenant des circuits logiques, tels que mémoires, ayant un temps de propagation, dit également de transfert ou de transit, supérieur à la période élémentaire d'un bit d'un signal numérique à débit élevé supérieur à 10 Mbit/s.

A cette fin, un dispositif de perte et de reprise de verrouillage est tel que défini dans la revendication 1.

Les mots extraits du registre à décalage sont analysés, non plus à la fréquence de rythme du signal numérique, mais à une fréquence égale au tiers de celle-ci. La recherche périodique du mot de verrouillage peut alors s'effectuer par des moyens de comparaison logiques, tels que mémoires PROM usuelles, ayant des temps de propagation de l'ordre 50 ns, bien que le signal numérique ait un débit élevé, typiquement de 34 Mbit/s. La comparaison de chaque mot extrait avec le mot de verrouillage s'effectue alors pendant au plus trois périodes élémentaires du signal numérique, ce qui permet d'effectuer de nombreuses comparaisons et donc de tolérer typiquement une erreur ou deux erreurs sur le mot de verrouillage.

Par ailleurs, lorsque le signal numérique est issu d'un démultiplexage par déjustification d'un signal à débit plus élevé, par exemple à 140 Mbit/s, le verrouillage de trame peut être maintenu lorsq'il y a une erreur de déjustification. Une telle déjustification peut se traduire par l'absence ou la présence erronée d'un bit de justification et donc un décalage de ±1 bit dans le signal numérique. La comparaison du mot extrait aux trois mots prédéterminés permet de détecter le mot de verrouillage malgré le décalage d'un bit, des moyens de synchronisation étant prévus pour remettre en phase l'horloge de synchronisation de trame avec le début du mot de verrouillage détecté.

D'autres avantages et caractéristiques de l'invention apparaîtront plus clairement à la lecture de la description suivante en référence aux dessins annexés correspondants dans lesquels:

– la Fig. 1 est un bloc-diagramme d'un circuit de perte et de reprise de verrouillage de trame selon l'invention, inclus dans un démultiplexeur à une extrémité de réception d'une ligne de transmission numérique;

– la Fig. 2A montre un décalage de plus et moins un bit dans trois mots extraits du registre à décalage et contenant un mot de verrouillage;

– la Fig. 2B est analogue à la Fig. 2A et correspond à un mot de verrouillage particulier à 12 bits; et

– la Fig. 3 montre une caractéristique d'autocorrélation du mot de verrouillage selon la Fig. 2B.

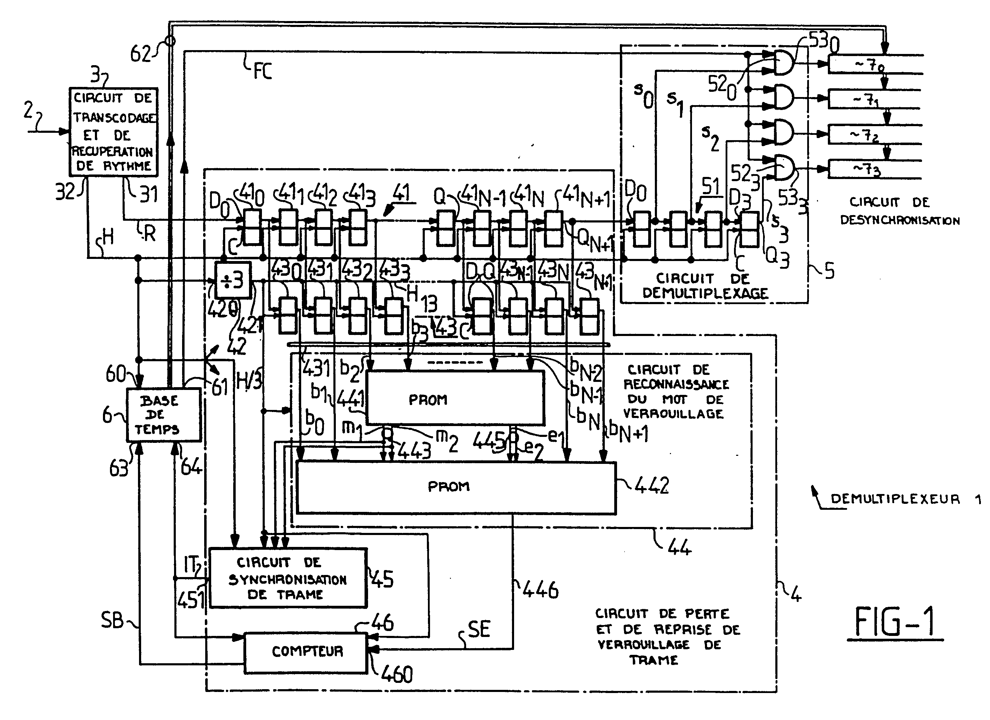

En référence à la Fig. 1, une extrémité de réception 1 d'une ligne de transmission numérique 2 reçoit un signal numérique à un débit de 34 Mbit/s. Le signal à 34 Mbis/s est l'un de quatre signaux plésiochrones obtenus par démultiplexage d'un signal numérique à débit élevé égal à 140 Mbit/s, dans un démultiplexeur constituant une extrémité de transmission de la ligne 2. Le signal à 34 Mbit/s est composé de quatre signaux numériques multiplexés à un débit faible de 8 Mbit/s. L'extrémité de réception 1 constitue ainsi un démultiplexeur. Les multiplexage et démultiplexage précités sont effectués en mettant en oeuvre des procédés de justification et déjustification connus. Par exemple, le signal à 140 Mbit/s comprend des bits d'indication de justification indiquant la présence et l'absence de bits de justification relatifs respectivement aux quatre signaux plésiochrones à 34 Mbit/s afin de les rendre synchrones avec un débit sensiblement plus élevé que leur débit nominal initial. Par ailleurs, comme il est connu, un signal numérique résultant d'un multiplexage est organisé en trames récurrentes signalées par un mot de verrouillage de trame prédéterminé. Le mot de verrouillage dans le signal numérique résultant à 34 Mbit/s comprend typiquement $N = 12$ bits consécutifs prédéterminés.

En pratique, le signal numérique reçu à 34 Mbit/s est codé selon un code en ligne, tel qu'un code HDBn. Un circuit de transcodage et de récupération de rythme 3 décode le signal numérique reçu en un signal résultant R en code binaire. Une sortie 31 du circuit 3 applique le signal R à une entrée $D_0$ d'un premier étage $41_0$ d'un registre à décalage 41. Le registre 41 est inclus dans un circuit de perte et de reprise de verrouillage de trame 4 propre à l'invention. Puis le signal résultant R est transmis par une sortie $Q_{N+1}$ d'un dernier étage $41_{N+1}$ du registre 41 vers une entrée $D_0$ d'un permier étage d'un registre à décalage 51 ayant quatre étages. Des entrées d'horloge C de tous les étages des registres 41 et 51 reçoivent un signal d'horloge H récupéré par le circuit 3 et transmis par une sortie 32 de celui-ci à la fréquence de rythme de 34 MHz du signal résultant R. Le signal d'horloge H est également délivré à une entrée 420 d'un diviseur de fréquence par 3, 42, contenu dans le circuit 4 et à une entrée 60 d'une base de temps 6.

Le registre 51 est inclus dans un circuit de démultiplexage 5 contenant quatre portes ET $52_0$ à $52_3$ ayant des entrées reliées respectivement aux sorties Q des quatre étages du registre 51. Des entrées de commande des portes $52_0$ à $52_3$ sont reliées à une sortie 61 de la base de temps délivrant un signal d'horloge à la fréquence de rythme FC des quatre signaux composants synchrones $s_0$ à $s_3$ à 8 Mbit/s multiplexés dans le signal R. Le circuit 5 constitue ainsi un convertisseur série-parallèle. Des sorties $53_0$ à $53_3$ des portes $52_0$ à $52_3$ transmettent respectivement les signaux $s_0$ à $s_3$ à quatre circuits de désynchronisation $7_0$ à $7_3$. Les circuits $7_0$ à $7_3$ reçoivent à travers un bus 62 différents signaux d'horloge produits par division de fréquence dans la base de temps 6 en vue de déjustifier les signaux $s_0$ à $s_3$ en des signaux correspondants plésiochrones à 8 Mbit/s.

Les divers signaux d'horloge établis dans la base de temps 6 doivent être synchronisés avec le mot de verrouillage de trame MV dans le signal résultant R. Cette condition est nécessaire pour démultiplexer convenablement les signaux composants dans le circuit 5 et pour détecter et extraire dans les circuits $7_0$ à $7_3$ notamment les bits d'indication de justification et les bits de justification ayant des emplacements prédéterminés dans la trame du signal R à 34 Mbit/s. Le circuit de perte et de reprise de verrouillage 4 est destiné à détecter le mot de verrouillage de trame MV dans le signal R afin que le mot MV constitue une référence temporelle pour l'élaboration des divers signaux d'horloge par la base de temps 6. Lorsque le mot de verrouillage de trame n'est pas reconnu pendant plusieurs périodes de trame consécutives, comme on le verra dans la suite, la base de temps 6 est bloquée, car le signal reçu résultant R est perturbé. Dans ces conditions, l'information intialement supportée par les signaux composants $s_0$ à $s_3$ est perdue puisque leur démultiplexage produirait des signaux dépourvus de toute signification. Une entrée de blocage 63 de la base de temps 6 reçoit alors un signal de blocage SB élaboré par le circuit 4 afin de maintenir le blocage de la base de temps tant qu'un mot de verrouillage ayant des caractéristiques définies dans la suite n'est pas détecté pendant une période de trame. Le blocage de la base de temps se traduit par celui de diviseurs de fréquence, tels que compteurs en anneau au modulos, contenus dans la base de temps et remis à zéro dès que le signal de blocage est interrompu.

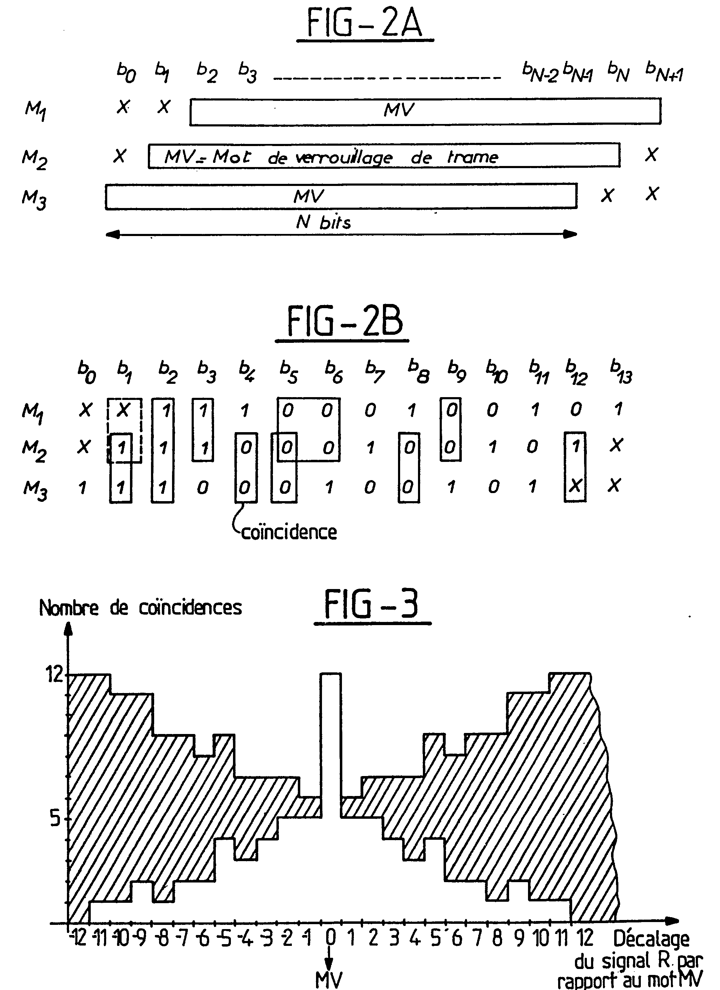

Comme déjà dit, la reconnaissance du mot de verrouillage de la trame à 34 Mbit/s ne peut pas être effectuée au rythme du signal d'horloge H, c'est-à-dire du décalage d'un bit dans le registre 41, ce rythme de 34 MHz étant trop rapide par rapport au temps de propagation des circuits à mémoire et des circuits combinatoires logiques usuels, tels que mémoires mortes programmables PROM. Ces temps de propagation sont supérieurs, de l'ordre de deux à trois fois, à un intervalle élémentaire de 30 ns environ occupé par un bit dans le signal à 34 Mbit/s. Selon l'invention, la recherche du mot de verrouillage de trame MV est effectuée une période sur trois du signal d'horloge H, et le contenu du registre 41 est analysé tous les trois bits reçus du signal résultant R. Lorsqu'un mot de verrouillage MV ayant N bits apparaît dans le registre 41, celui-ci peut être décalé de plus ou moins un bit puisqu'un signal d'horloge à la fréquence H/3 n'est pas a priori en phase avec le mot de verrouillage. Ces conditions impliquent que le registre à décalage doit contenir $N + 2$ étages $41_0$ à $41_{N+1}$, et qu'il existe trois mots prédéterminés $M_1$, $M_2$ et $M_3$ contenant le mot de verrouillage et ayant $N + 2$ bits $b_0$ à $b_{N+1}$, susceptibles d'indiquer le début d'une trame pendant trois intervalles élémentaires consécutifs. Comme montré à la Fig. 2A, le mot de verrouillage MV est au centre du mot $M_2$, et est décalé d'un bit dans les mots $M_1$ et $M_3$ comparativement au mot $M_2$. Dans les Figs. 2A et 2B, des crois désignent des bits quelconques du signal R précédant le mot de verrouillage MV et succédant à celui-ci.

Comme montré à la Fig. 1, la recherche du mot de verrouillage à la fréquence H/3 est effectuée au moyen d'un registre tampon 43 ayant $N + 2$ étages $43_0$ à $43_{N+1}$. Les étages des registres 41, 43 et 51 sont des bascules du type D. Des entrées D des éta-

ges $43_0$ à $43_{N+1}$ sont reliées respectivement à des sorties Q des étages $41_0$ à $41_{N+1}$ du registre 41. Le transfert du contenu du registre 41 dans le registre 43 est commandé par le signal d'horloge H/3 délivré par une sortie 421 du diviseur de fréquence par 3, 42, aux entrées d'horloge C des étages du registre 43. Des sorties parallèles Q des étages $43_0$ à $43_{N+1}$ transmettent le contenu binaire $b_0$ à $b_{N+1}$ du registre 41 extrait à la fréquence H/3 à un circuit de reconnaissance du mot de verrouillage 44 à travers un bus 431 ayant $N+2$ conducteurs.

Le circuit 44 compare chaque mot transmis par le bus 431 aux trois mots prédéterminés $M_1$, $M_2$ et $M_3$ et indique si l'un des trois $M_1$, $M_2$ et $M_3$ a été détecté avec zéro, une, deux ou plus de deux erreurs. Selon la réalisation illustrée, le circuit 44 comprend principalement deux mémoires PROM 441 et 442. Des entrées de la première mémoire 441 sont reliées aux sorties Q des N-2 étages centraux $43_2$ à $43_{N-1}$ du registre 43 à travers le bus 431. La mémoire 441 reçoit N-2 bits $b_2$ à $b_{N-1}$ appartenant normalement tous au mot de verrouillage de trame MV lorsque l'un des mots $M_1$, $M_2$ et $M_3$ est détecté, comme montré à la Fig. 2A. En pratique, les bits extraits $b_2$ à $b_{N-1}$ sont comparés aux N-2 bits centraux des différentes compositions de chacun des mots $M_1$, $M_2$ et $M_3$ ayant 0, 1 et $I=2$ bits erronés. Lorque les bits $b_2$ à $b_{N-1}$ correspondent à ceux du mot $M_1$, $M_2$ et $M_3$ à plus $I=2$ erreurs près, la mémoire 441 délivre un mot d'adresse respectif ayant deux bits $m_1$ et $m_2$ tel que «00», «01» ou «10» à travers un bus 443 vers la seconde mémoire 442 et un circuit de synchronisation de trame 45. Simultanément au mot d'adresse $m_1m_2$, la mémoire 441 transmet un mot d'erreur ayant deux bits $e_1$ et $e_2$ vers la mémoire 442 à travers un bus 445. Le mot $e_1e_2$ est égal à «00», «01» ou «10» lorsque les N-2 bits $b_2$ à $b_{N-1}$ analysés dans la mémoire 441 sont respectivement identiques ou identiques à un ou à $I=2$ près aux N-2 bits centraux des mots $M_1$, $M_2$ ou $M_3$. Lorsqu'il y a au moins $I+1=3$ erreurs, le mot extrait $b_0$ à $b_{N+1}$ est réputé ne pas contenir le mot de verrouillage MV et le mot $e_1e_2$ est égal à «11». Lorsqu'aucun des mots $M_1$, $M_2$ et $M_3$ n'est reconnu, les mots $m_1m_2$ et $e_1e_2$ sont égaux à «11».

La seconde mémoire 442 compare les bits extraits restants $b_0$, $b_1$, $b_N$ et $b_{N+1}$ transmis par le bus 431 aux bits correspondants des mots $M_1$, $M_2$ et $M_3$. En fait, la comparaison s'effectue en fonction de l'adresse $m_1m_2$ du mot $M_1$, $M_2$, $M_3$ délivrée par le bus 443. Si $m_1m_2$ est égal à «00», seuls les bits $b_N$ et $b_{N+1}$ sont comparés aux bits correspondants du mot $M_1$; si $m_1m_2$ est égal à «01», seuls les bits $b_1$ et $b_N$ comparés aux bits correspondants du mot $M_2$; enfin, si $m_1m_2$ est égal à «10», seuls les bits $b_0$ et $b_1$ sont comparés aux bits correspondants du mot $M_3$. Par contre, aucune comparaison n'est accomplie dans la mémoire 442 lorsque le mot $m_1m_2$ est égal à «11» et correspond à un mot transmis par le bus 431 qui est différent des mots $M_1$, $M_2$ et $M_3$ ou quelque peu différent de celui-ci avec au moins $I+1=3$ bits erronés. La mémoire 442 additionne le nombre d'erreurs dans les N-2 bits $b_2$ à $b_{N-1}$ délivré sous la forme du mot $e_1e_2$ par la mémoire 441 au nombre d'erreurs dans les bits $b_0$, $b_1$, $b_N$ et $b_{N-1}$ comparés dans la mémoire 442. Un signal d'erreurs SE est établi par la mémoire 442 et transmis à une entrée 460 d'un compteur 46 à travers un conducteur 446. Le signal SE indique que le nombre d'erreurs détectées est égal à zéro, ou est égal à une ou $I=2$ erreurs ou est strictement supérieur à $I=2$.

Selon la réalisation illustrée, le circuit 44 contient une mémoire PROM 441 ayant une capacité de $4 \times 1024$ bits et une mémoire PROM 442 ayant une capacité de $2 \times 256$ bits. Cependant, selon une autre variante plus simple, les mémoires 441 et 442 peuvent être remplacées par une seule mémoire ayant une capacité de $4 \times 16$ kbits.

Pour que les trois mots prédéterminés $M_1$, $M_2$ et $M_3$ puissent être différenciés entre eux, c'est-à-dire être détectés sans ambiguïté tout en tolérant sur chacun d'eux un nombre d'erreurs prédéterminé I, le mot de verrouillage MV doit présenter une propriété d'autocorrélation particulière déterminée choisie de sorte que le nombre de bits identiques ayant des mêmes rangs dans les mots $M_1$, $M_2$ et $M_3$ soit le moins élevé possible. En d'autres termes, de nombreux bits des mots $M_1$ et $M_3$ différent des bits de mêmes rangs dans le mot $M_2$, et également de nombreux bits du mot $M_1$ différent des bits de mêmes rangs dans le mot $M_3$.

Les recherches ont montré que pour un mot de verrouillage de trame ayant 12 bits, le nombre de bits «anticoïncidants» en comparant deux à deux le mot de verrouillage MV et les deux mots correspondants décalés de plus et moins un bit peut être égal à 5 au maximum, ce qui permet de différencier les mots $M_1$, $M_2$ et $M_3$ en tolérant au plus $I=2$ erreurs sur chacun d'eux. Un tel mot de verrouillage à 12 bits est par exemple le mot «111000100101» qui constitue de préférence le mot de verrouillage de trame MV dans le signal R à 34 Mbit/s selon l'invention. La propriété d'autocorrélation de ce mot est présentée sous la forme de la caractéristique montrée à la Fig. 3. En référence à la Fig. 2B, la priopriété d'autocorrélation est déduite de comparaisons bit à bit du mot de verrouillage «111000100101» avec le mot «X11100010010» correspondant aux bits $b_1$ à $b_N$ du mot $M_1$ et avec le mot «11000100101X» correspondant aux bits $b_1$ à $b_N$ du mot $M_3$. La zone hachurée dans la Fig. 3 représente les variations du nombre de coïncidences en fonction des bits X du champ d'information du signal numérique pour des décalages de 0 à 12 bits de part et d'autre du mot de verrouillage MV. Ainsi, le nombre de coïncidences possibles, qui sont entourées par des rectangles dans la Fig. 2B, correspondant à des bits indentiques ayant des mêmes rangs parmi les bits $b_1$ à $b_N$ du mot $M_2$ et de l'un des mots $M_1$ et $M_3$ est au minimum égal à 5 et au maximum égal à 6 en fonction des états X du bit $b_1$ du mot $M_1$ et du bit $b_N$ du mot $M_3$. Pour un décalage de deux bits correspondant à la comparaison des mots $M_1$ et $M_3$, le nombre de coïcidences possibles entre les mots $M_1$ et $M_3$ est au minimum égal à 5 et au maximum égal à 7. En ne tolérant aucune erreur sur la détection de tous les mots $M_1$, $M_2$ et $M_3$, il y a toujours un minimum de 5 anticoïncidences entre eux. En tolérant une ou $I=2$ erreurs sur la détetction des mots $M_1$, $M_2$ et $M_3$, le nombre minimum d'anticoïncidences est égal à 3 et 1 respectivement, ce qui permet de distinguer les mots $M_1$, $M_2$ et $M_3$ de façon certaine dans tous les cas et donc de déterminer de façon certaine la phase du signal d'horloge H/3 par rapport au mot de verrouillage détecté, comme on le verra dans la suite.

Le mot de verrouillage de trame peut être également le mot $\overline{MV}$ = 000111011010 complémentaire du mot MV = 111000100101, ou le mot MV* = 101001000111 symétrique de mot MV et obtenu en permutant chacun des N/2 premiers bits de rang 1 à N/2 avec le bit de rang N à (N/2) + 1, ou bien encore le mot $\overline{MV^*}$ = 010110111000 complémentaire du mot MV*. En effet, les mots $\overline{MV}$, MV* et $\overline{MV^*}$ possèdent la propriété d'autocorrélation définie ci-dessus.

Selon d'autres exemples, le mot à 7 bits «1110010» et les mots à 11 bits «11100010010» et «10011101101» ainsi que leurs compléments, symétriques et compléments de symétrique, présentent des propriétés d'autocorrélation souhaitées. Le mot «1110010» ne permet de tolérer qu'une erreur avec un décalage de plus et moins 1 bit et donc de prévoir une fréquence d'extraction de H/3 au maximum. Le mot «11100010010» permet de tolérer une erreur avec une horloge d'extraction de H/5 au maximum ou deux erreurs avec une horloge d'extraction de H/3.

Plus généralement, si le mot de verrouillage MV a N bits, et s'il y a un minimum 2I + 1 anticoïncidences entre les mots $M_1$, $M_2$, ... $M_J$ correspondant à J décalages successifs d'un bit, le mot de verrouillage MV peut être détecté au rythme de H/J en tolérant I erreurs sur le mot de verrouillage.

En se reportant à nouveau à la Fig. 1, le circuit de synchronisation de trame 45 reçoit les signaux d'horloge H, H/3 et le mot d'adresse $m_1m_2$. Le circuit 45 décode le mot $m_1m_2$ afin de générer une impulsion de tram IT en phase avec le début du mot de verrouillage détecté MV, en tenant compte d'un décalage possible d'un bit ou de deux bits au rythme de l'horloge H dans les mots détectés $M_1$, $M_2$ et $M_2$ par rapport à la position effective du mot de verrouillage. Les impulsions de trame IT sont transmises par une sortie 451 du circuit 45 à une entrée de synchronisation 64 de la base de temps 6. Elles servent de référence temporelle à la base de temps 6 afin que celle-ci élabore à partir du signal d'horloge H les divers signaux d'horloge déjà mentionés transmis par le bus 61-62. Lorsque le mot $m_1m_2$ est égal à «00» et correspond à la détection du mot $M_1$, le début du mot MV détecté est en phase avec le signal d'horloge H/3, et une impulsion de synchronisation de trame $IT_1$ est délivrée par la sortie 451 du circuit 45 vers l'entrée de synchronisation 64 de la base de temps. Lorsque le mot $m_1m_2$ est égal à «01» ou «10» et correspond à la détection du mot $M_2$ ou $M_3$, une impulsion $IT_2$ ou $IT_3$ est retardée d'un intervalle élémentaire ou de deux intervalles élémentaires par rapporto au signal d'horloge H/3 et est transmise par la sortie 451 du circuit 45. Si $m_1m_2$ est égal à «11», la fréquence des impulsions de synchronisation de trame demeurent inchangée par rapport à la fréquence précédemment établie en dépendance du signal d'horloge H/3. Les impulsions IT sont ainsi recalées sur le mot de verrouillage à chaque décalage par rapport à l'horloge H/3 afin de permettre un nouveau décalage de plus ou moins un bit ultérieurement. Les impulsions de synchronisation reçues à l'entrée 64 de la base de temps 6 suivent les variations d'au plus deux intervalles élémentaires de la période de trame dans le signal résultant R. De telles variations peuvent être dues à un défaut de déjustification dans le démultiplexeur au débit supérieur à 140 Mbit/s, impliquant qu'un bit de justification dans la trame à 140 Mbit/s n'a pas été extrait ou qu'un bit d'information a été extrait à tort, suite à une inversion du bit d'indication de justification correspondant.

Le compteur 46 est de préférence un compteur à K + 2 = 5 états qui est capable de changer d'état au rythme des impulsions de trame IT transmises par la sortie 451 du circuit de synchronisation 45. Le compteur 45 reçoit, en outre, le signal d'horloge H/3 à partir du diviseur 42 afin de tenir compte du déphasage entre le signal H/3 et l'information transmise par le signal d'erreur SE, dû au temps de traitement du mot extrait dans le circuit 44. Un premier état du compteur 46 indique que le circuit 44 n'a pas reconnu depuis au moins K + 1 périodes de trame successives un mot de verrouillage. En d'autres termes, lorsqu'après K = 3 impulsions de synchronisation IT, aucun mot de verrouillage ayant au plus I = 2 erreurs n'a été détecté, le verrouillage de trame est considéré comme perdu. Le compteur 46 est remis à zéro et maintient le blocage de la base de temps 6 par un état constant de l'entrée 63, tant qu'aucun mot de verrouillage, ou plus précisément tant qu'aucun des mots $M_1$, $M_2$ et $M_3$ n'est détecté avec zéro erreur. Cette détection avec zéro erreur permet d'acquérir le verrouillage de trame en évitant tout verrouillage intempestif sur une imitation du mot de verrouillage, notamment dans le champ d'information du signal numérique R.

Puis, dès que l'un des mots $M_1$, $M_2$ et $M_3$ est détecté avec zéro erreur, le compteur 46 passe à un second état. Le changement d'état est commandé par une impulsion du signal SE en correspondance avec une impulsion de tram IT. A ce second état, le compteur 46 débloque la base de temps 6 par changement d'état de l'entrée 63 et le verrouillage est réputé définitivement acquis.

Tant qu'une impulsions SE est reçue par le compteur 46, en même temps qu'une impulsion IT, ce qui signifie la détection d'un mot de verrouillage avec au plus deux erreurs, le compteur 46 demeure à son second état. Si une impulsion SE n'est point reçue en réponse à une impulsion IT, le compteur passe à un troisième état. D'une manière analogue, le compteur passe à une quatrième état ou à un cinquième état lorsque deux ou K = 3 impulsions SE ne sont pas reçues en réponse à deux ou K = 3 impulsions consécutives IT. Aux troisième, quatrième et cinquième état, la base de temps 6 est maintenue débloquée par le compteur 46. Le compteur 46 bascule de nouveau au second état dès qu'une impulsion SE est reçue en même temps qu'une impulsion IT succédant au basculement du compteur au troisième, quatrième ou cinquième état. Par contre, après une période de trame succédant au passage du quatrième au cinquième état, si le compteur 46 ne reçoit pas une impulsions SE, le compteur 46 revient à nouveau au premier état et bloque la base de temps 6. Ainsi, le verrouillage est perdu dès que le mot de verrouillage de trame n'a pas été détecté à la fréquence de trame avec au plus deux erreurs dans $K = 4$ mots extraits consécutifs ayant $N + 2$ bits, que peuvent être analogues à l'un des mots $M_1$, $M_2$ et $M_3$.

On notera que la reprise du verrouillage est acquise dès qu'un mot de verrouillage ayant zéro erreur est détecté. Cependant, selon d'autres variantes, le verrouillage peut être réputé acquis après la détection de k mots de verrouillage consécutifs ayant zéro erreur.

Le démultiplexage du signal numérique résultant R à 34 Mbit/s en quatre signaux composants à 8 Mbit/s a été donné à titre d'exemple. Selon une variante, le signal à 34 Mbit/s est obtenu par multiplexage d'un signal composant à 32 Mbit/s, tel qu'un signal vidéo de télévision numérisé, et d'un signal composant à 2 Mbit/s, tel qu'un signal son numérisé.

### Revendications

1. Dispositif de perte et de reprise de verrouillage de trame (4) pour un signal numérique (R) convoyant un mot de verrouillage de trame périodique (MV) ayant un nombre N de bits prédéterminés, le dispositif comprenant un registre à décalage (41) recevant le signal numérique sous la commande d'un premier signal d'horloge (H), un registre parallèle/parallèle (43) relié à des sorties parallèles du registre à décalage (41) et recevant un second signal d'horloge (H/3) pour extraire des mots contenus dans le registre à décalage (41) à une fréquence inférieure à celle du premier signal d'horloge (H), et des moyens pour détecter (44) le mot de verrouillage (MV) dans lesdits mots extraits ($b_0$ à $b_{N+1}$), caractérisé en ce que le second signal d'horloge (H/3) a une fréquence égale au tiers de celle du premier signal d'horloge (H) et les registres (41, 43) et mots extraits comprennent respectivement $N + 2$ étages et $N + 2$ bits, en ce que les moyens pour détecter comprennent des premiers moyens (441) recevant N-2 bits centraux ($b_2$ à $b_{N-1}$) de chaque mot extrait pour détecter à partir desdits bits centraux et avec une probabilité d'erreur prédéterminée la présence et la position du mot de verrouillage (MV) dans un mot extrait, et des seconds moyens (442) recevant quatre bits latéraux ($b_0$ , $b_1$, $b_N$, $b_{N+1}$) de chaque mot extrait pour confirmer ou infirmer à partir desdits bits latéraux la détection effectuée par les premiers moyens pour détecter (441), et en ce que le dispositif comprend, en outre, des moyens (45) reliés aux moyens pour détecter (44) pour produire une impulsion de synchronisation de trame (IT) en phase avec le début ($b_0$, $b_1$ ou $b_2$) du mot de verrouillage (MV) détecté dans le mot extrait.

2. Dispositif conforme à la revendication 1, caractérisé en ce qu'un mot extrait ($b_0$ à $b_{N+1}$) est réputé contenir le mot de verrouillage (MV) lorsqu'au moins les N-2 bits centraux ($b_2$ à $b_{N-1}$) du mot extrait (correspondant à $e_1e_2 = 00$) sont respectivement indentiques à N-2 bits centraux d'un permier, second, ou troisième mot prédéterminé ($M_1$, $M_2$, $M_3$) ayant $N + 2$ bits et contenant respectivement N derniers bits, N bits centraux, et N premiers bits respectivement identiques à N bits du mot de verrouillage (MV).

3. Dispositif conforme à la revendication 1, caractérisé en ce qu'un mot extrait ($b_0$ à $b_{N+1}$) est réputé contenir le mot de verrouillage (MV) lorsqu'au moins N-(l+2) bits parmi les N-2 bits centraux ($b_2$ à $b_{N-1}$) du mot extrait (correspondant à $e_1e_2 \neq 11$) sont respectivement indentiques à N-(l+2) bits de mêmes rangs d'un premier, second, ou troisième mot prédéterminé ($M_1$, $M_2$, $M_3$) ayant $N + 2$ bits et contenant respectivement N derniers bits, N bits centraux, et N premiers bits respectivement identiques à N bits du mot de verrouillage, l'entier l étant de préférence égal ou inférieur à 2.

4. Dispositif conforme à l'une quelconque des revendications 1 à 3, comprenant des moyens (46) pour bloquer une base de temps (6) dès que K mots de verrouillage consécutifs erronés sont détectés dans le signal numérique (R) et pour débloquer la base de temps (6) dès que k mots de verrouillage consécutifs sans erreur sont détectés dans le signal numérique (R), caractérisé en ce que les moyens pour détecter (44) délivrent un signal d'erreur (SE) aux moyens pour bloquer et débloquer (46) indiquant que le mot de verrouillage contenu dans le mot extrait réputé contenir le mot de verrouillage (MV) est incorrect lorsqu'au moins l+1 bits dudit mot de verrouillage contenu sont erronés, l'entier k étant de préférence égal à 1 et l'entier l étant de préférence égal à 1 ou 2.

5. Dispositif conforme à la revendication 4, caractérisé en ce que les premiers moyens pour détecter (441) délivrent un nombre d'erreurs ($e_1$, $e_2$) inférieur ou égal à l pour chaque mot extrait réputé contenir le mot de verrouillage (MV), et en ce que ledit nombre d'erreurs ($e_1$, $e_2$) est fourni auxdits seconds moyens pour confirmer ou infirmer (442) en vue de produire ledit signal d'erreur (SE).

6. Dispositif conforme à l'une quelconque des revendications 2 à 5, caractérisé en ce que le nombre de bits de mêmes rangs qui diffèrent dans les trois mots prédéterminés ($M_1$, $M_2$, $M_3$) pris deux à deux est au minimum égal à 3 ou 5.

7. Dispositif conforme à l'une quelconque des revendications 1 à 6, caractérisé en ce que le mot de verrouillage (MV) est tel qu'au moins N/2-1 bits ($b_2$, $b_3$, $b_5$, $b_6$, $b_9$) parmi les N-1 bits entre les troisième et pénultième bits des premier et second mots prédéterminés ($M_1$, $M_2$) coïncident et est tel qu'au moins N/2-1 bits ($b_1$, $b_2$, $b_4$, $b_5$, $b_8$) parmi les N-1 bits entre les second et antépénultième bits des second et troisième mots prédéterminés ($M_2$, $M_3$) coïncident.

8. Dispositif conforme à la revendication 6 ou 7, caractérisé en ce que le mot de verrouillage (MV) est remplacé par son complément ($\overline{MV}$), son symétrique (MV*) ou le complément de son symétrique ($\overline{MV*}$).

9. Dispositif conforme à l'une quelconque des revendications 6 à 8, caractérisé en ce que le mot de verrouillage (MV) est «111000100101».

### Claims

1. Frame alignment loss and recovery device (4) for a digital signal (R) carrying a periodic frame alignment word (MV) having a number N of predetermined bits, the device comprising a shift register (41) receiving the digital signal under the control of a first clock signal (H), a parallel/parallel register (43) linked to parallel outputs from the shift register (41) and receiving a second clock signal (H/3) for extracting words contained in the shift register (41) at a frequency less than that of the first clock signal (H), and means for detecting (44) the alignment word (MV) in said extracted words ($b_0$ to $b_{N+1}$), characterized in that the second clock signal (H/3) has a frequency equal to a third of that of the first clock signal (H), and the registers (41, 43) and extracted words respectively comprise N + 2 stages and N + 2 bits, in that the detecting means comprise first means (441) receiving N-2 central bits ($b_2$ to $b_{N-1}$) from each extracted word for detecting from said central bits and with a predetermined error probability the presence and location of the aligment word (MV) in an extracted word, and second means (442) receiving four lateral bits ($b_0$, $b_1$, $b_N$, $b_{N+1}$) from each extracted word for confirming or cancelling from said lateral bits the detection performed by the first detecting means (441), and in that the device comprises, further, means (45) linked to the detecting means (44) for deriving a frame synchronisation pulse (IT) in phase with the start ($b_0$, $b_1$ or $b_2$) of the alignment word (MV) detected in the extracted word.

2. Device according to claim 1, characterized in that an extracted word ($b_0$ to $b_{N+1}$) is considered to contain the alignment word (MV) when at least N-2 central bits ($b_2$ to $b_{N-1}$) in the extracted word (corresponding to $e_1e_2 = 00$) are respectively identical to N-2 central bits in a first, second, or third predetermined word ($M_1$, $M_2$, $M_3$) having N + 2 bits and respectively containing N last bits, N central bits, and N first bits respectively identical to N bits from the alignment word (MV).

3. Device according to claim 1, characterized in that an extracted word ($b_0$ to $b_{N+1}$) is considered to contain the alignment word (MV) when at least N-(I + 2) bits out of N-2 central bits ($b_2$ to $b_{N-1}$) in the extracted word (corresponding to $e_1e_2 \neq 11$) are respectively identical to N-(I + 2) like-rank bits in a first, second, or third predetermined word ($M_1$, $M_2$, $M_3$) having N + 2 bits and containing respectively N last bits, N central bits, and N first bits respectively identical to N bits in the alignment word, the integer I being preferably equal or less than 2.

4. Device according to any one of claims 1 to 3, comprising means (46) for blocking a time base (6) whenever K consecutive erroneous alignment words are detected in the digital signal (R) and for unblocking the time base (6) whenever k consecutive alignment words with no error are detected in the digital signal (R), characterized in that the detecting means (44) deliver an error signal (SE) to the blocking and unblocking means (46) indicating that the alignment word contained in the extracted word considered as containing the alignment word (MV) is incorrect when at least I + 1 bits from said contained alignment word are erroneous, the integer k being preferably equal to 1 and the integer I being preferably equal to 1 or 2.

5. Device according to claim 4, characterized in that the first detecting means (441) deliver a number of errors ($e_1$, $e_2$) less than or equal to I for each extracted word considered as containing the alignment word (MV), and in that said number of errors ($e_1$, $e_2$) is provided to said second confirming or cancelling means (442) thereby producing said error signal (SE).

6. Device according to any one of claims 2 to 5, characterized in that the number of like-rank bits that differ in the three predetermined words ($M_1$, $M_2$, $M_3$) taken two by two is at least equal to 3 or 5.

7. Device according to any one of claims 1 to 6, characterized in that the alignment word (MV) is such that at least N/2-1 bits ($b_2$, $b_3$, $b_5$, $b_6$, $b_9$) out of the N-1 bits between the third and the penultimate bits in the first and second predetermined words ($M_1$, $M_2$) coincide and is such that at least N/2-1 bits ($b_1$, $b_2$, $b_4$, $b_5$, $b_8$) out of the N-1 bits between the second and the ante-penultimate bits in the second and third predetermined words ($M_2$, $M_3$) coincide.

8. Device according to claim 6 or 7, characterized in that the alignment word (MV) is replaced by its complementary word ($\overline{MV}$), its symmetrical word (MV*) or the complementary word of its symmetrical word ($\overline{MW^*}$).

9. Device according to any one of claims 6 to 8, characterized in that the alignment word (MV) is «111000100101».

## Patentansprüche

1. Verlust- und Wiedergewinnungsvorrichtung der Rahmenverriegelung (4) für ein Digitalsignal (R), welches ein periodisches Rahmenverriegelungswort (MV) mit einer Anzahl N vorbestimmter Bits mitführt, mit einem Schieberegister (41), welches das Digitalsignal unter Steuerung eines ersten Taktsignals (H) empfängt, mit einem Parallel/Parallel-Register (43), welches mit den parallelen Ausgängen des Schieberigisters (41) verbunden ist und ein zweites Taktsignal (H/3) zum Extrahieren von in dem Schieberegister (41) enthaltenen Wörtern mit einer gegenüber dem ersten Taktsignal (H) geringeren Frequenz aufnimmt, sowie mit Mitteln zum Erfassen (44) des Verriegelungswortes (MV) in den extrahierten Wörtern ($b_0$ bis $b_{N+1}$), dadurch gekennzeichnet, daß das zweite Taktsignal (H/3) ein Drittel der Frequenz des estern Taktsignals (H) aufweist und daß die Register (41, 43) und die extrahierten Wörten beziehentlich N + 2 Stufen und N + 2 Bits enthalten, und daß die Mittel zum Erfassen erste Mittel (441) aufweisen, welche N-2 Zentralbits ($b_2$ bis $b_{N-1}$) in jedem extrahierten Wort zum Erfassen, ausgehend von den Zentralbits und mit einer vorgegebenen Fehlerwahrscheinlichkeit, der Anwesenheit und der Stelle des Verriegelungswortes (MV) in einem extrahierten Wort empfangen, sowie zweite Mittel (442) aufweisen, die vier Seitenbits ($b_0$, $b_1$, $b_N$, $b_{N+1}$) jedes extrahierten Wortes zum Bestätigen oder nicht Bestätigen, ausgehen von den Seitenbits, der erfolgten Erfassung durch die ersten Mittel zum Erfassen (441) empfangen, und daß die Vorrichtung unter anderem mit den Mitteln zum Erfassen (44) verbundene Mittel (45) zum Erzeugen eines Rahmensynchronisationsimpules (IT) phasengleich mit dem Beginn ($b_0$, $b_1$ oder $b_2$) des im dem extrahierten Wort erfaßten Verriegelungswortes (MV) aufweisen.

2. Vorrichtung nach Anspruch 1, dadurch gekennzeichnet, daß ein extrahiertes Wort ($b_0$ bis $b_{N+1}$) als das Verriegelungswort (MV) enthaltend angesehen wird, wenn wenigstens die N-2 Zentralbits ($b_2$ bis $b_{N-1}$) des extrahierten Wortes (entsprechend $e_1e_2 = 00$) N-2 Zentralbits eines ersten, zweiten oder dritten vorbestimmten Wortes ($M_1$, $M_2$, $M_3$) beziehentlich identisch sind, welches N + 2 Bits hat und beziehentlich N letzte Bits, N Zentralbits und N erste Bits enthält, die beziehentlich den N-Bits des Verriegelungswortes (MV) identisch sind.

3. Vorrichtung nach Anspruch 1, dadurch gekennzeichnet, daß ein extrahiertes Wort ($b_0$ bis $b_{N+1}$) als das Verriegelungswort (MV) enthaltend angesehen wird, wenn wenigstens N-(I + 2) Bits, darunter die N-2 Zentralbits ($b_2$ bis $b_{N-1}$) des extrahierten Wortes (entsprechend $e_1e_2 \neq 11$) N-(I + 2) Bits von gleichem Rang eines ersten, zweiten oder dritten vorbestimmten Wortes ($M_1$, $M_2$, $M_3$) beziehentlich identisch sind, welches N + 2 Bits hat und beziehentlich N letzte Bits, N Zentralbits und N erste Bits enthält, die beziehentlich den N Bits des Verriegelungswortes identisch sind, wobei die ganze Zahl I vorzugsweise gleich oder kleiner als 2 ist.

4. Vorrichtug nach einem der Ansprüche 1 bis 3 mit Mitteln (46) zum Blockieren eines Taktgebers (6), sobald K aufeinander folgende fehlerhafte Verriegelungswörter in dem Digitalsignal (R) festgestellt worden sind, und zum Freigeben des Taktgebers (6), sobald k aufeinander folgende fehlerfreie Verriegelungswörter in dem Digitalsignal (R) festgestellt worden sind, dadurch gekennzeichnet, daß die Mittel zum Erfassen (44) ein Fehlersignal (SE) an die Mittel zum Blockieren und Freigeben (46) abgeben, wodurch angezeigt wird, daß das in dem extrahierten und als das Verriegelungswort (MV) enthaltend angesehenen Wort enthaltene Verriegelungswort inkorrekt ist, wenn wenigstens I + 1 Bits des enthaltenen Verriegelungswortes fehlerhaft sind, wobei die ganze Zahl k zweckmäßig gleich 1 ist und die ganze Zahl I vorzugsweise 1 oder 2 beträgt.

5. Vorrichtung nach Anspruch 4, dadurch gekennzeichnet, daß die ersten erfassungmittel (441) eine Feherlzahl ($e_1$, $e_2$), die kleiner oder gleich groß I ist, für jedes extrahierte Wort, welches als das Verriegelungswort (MV) enthaltend angesehen wird, abgeben und daß die Fehlerzahl ($e_1$, $e_2$) an die zweiten Mittel zum Bestätigen oder Nichtbestätigen (442) zum Erzeugen des Fehlersignals (SE) gegeben wird.

6. Vorrichtung nach einem der Ansprüche 2 bis 5, dadurch gekennzeichnet, daß die Anzahl der Bits gleichen Rangs, welche in den vorbestimmten drei Wörtern ($M_1$, $M_2$, $M_3$) paarweise genommen unterschiedlich sind, mindestens gleich 3 oder 5 ist.

7. Vorrichtung nach einem der Ansprüche 1 bis 6, dadurch gekennzeichent, daß das Verriegelungswort (MV) derart beschaffen ist, daß wenigstens N/2-1 Bits ($b_2$, $b_3$, $b_5$, $b_6$, $b_9$) unter den N-1 Bits zwischen den dritten und vorletzten Bits der ersten und zweiten vorbestimmten Wörter ($M_1$, $M_2$) koinzidieren, und daß wenigstens N/2-1 Bits ($b_1$, $b_2$, $b_4$, $b_5$, $b_8$) in den N-1 Bits zwischen den zweiten un den drittletzten Bits der zweiten und dritten vorbestimmten Wörter ($M_2$, $M_3$) koinzidieren.

8. Vorrichtung nach Anspruch 6 oder 7, dadurch gekennzeichnet, daß das Verriegelungswort (MV) durch sein Komplement ($\overline{MV}$), durch sein Symmetrisches (MV\*) oder durch das Komplement seines Symmetrischen ($\overline{MV^*}$) ersetzt ist.

9. Vorrichtung nach einem der Ansprüche 6 bis 8, dadurch gekennzeichnet, daß das Verriegelungswort (MV) durch «111000100101» gebildet ist.

FIG-1

# FIG-2A

# FIG-2B

coïncidence

# FIG-3

Nombre de coïncidences

Décalage du signal R par rapport au mot MV

MV

11